# EUROPÄISCHE PATENTSCHRIFT

(11) **EP 2 551 219 B1**
(45) Veröffentlichungstag und Bekanntmachung des Hinweises auf die Patenterteilung: **24.02.2016**
(21) Anmeldenummer: 12177814.6
(22) Anmeldetag: 25.07.2012
(51) Int. Cl.: B65G 21/20

(54) **Werkstücktransportsystem**
Workpiece transport system
Système de transport de pièce usinée

(30) Priorität: 28.07.2011 DE 102011079981
(43) Veröffentlichungstag der Anmeldung: 30.01.2013
(73) Patentinhaber: Homag Holzbearbeitungssysteme GmbH, 72296 Schopfloch (DE)
(72) Erfinder: Gauß, Achim, 72280 Dornstetten (DE)
(74) Vertreter: Hoffmann Eitle

(56) Entgegenhaltungen:
- EP-A1- 2 241 523
- WO-A1-92/14664
- DE-A1- 4 317 698
- DE-A1- 10 323 910
- DE-A1- 19 653 381
- DE-A1- 19 847 249
- DE-A1-102004 023 494
- DE-C1- 3 701 564
- DE-U1- 20 313 016
- US-A1- 2009 121 417

## Beschreibung

### Technisches Gebiet

Die Erfindung betrifft ein Werkstücktransportsystem zum Bearbeiten von Werkstücken, die bevorzugt zumindest abschnittsweise aus Holz, Holzwerkstoffen, Kunststoff, Aluminium oder dergleichen bestehen, nach dem Oberbegriff von Anspruch 1.

### Stand der Technik

Bei Maschinen zum Bearbeiten von Werkstücken werden die Werkstücke häufig mittels eines Werkstücktransportsystems in einer Durchlaufrichtung transportiert und im Zuge des Transports von verschiedenen Bearbeitungseinheiten bearbeitet. Dabei ist es einerseits wichtig, dass die Werkstücke stabil durch das Werkstücktransportsystem gehalten werden, um die gewünschte Präzision zu erzielen. Gleichzeitig soll das Werkstück von möglichst vielen Seiten zugänglich sein, und das Werkstücktransportsystem soll üblicherweise eine einfache Konstruktion aufweisen und hohe Fördergeschwindigkeiten ermöglichen.

Ein Werkstücktransportsystem ist beispielsweise in der DE 103 23 910 A1 offenbart. Bei diesem Werkstücktransportsystem wird ein Endlosumlaufelement in Form einer Kette mittels Magneten gegen eine Führungsmaschine verspannt. Hierdurch ergibt sich ein ruhiger Lauf der Transportkette. Allerdings hat sich gezeigt, dass für ein sicheres Festhalten der Werkstücke an der Transportkette ein sogenanntes Oberdrucksystem erforderlich ist, welches die Werkstücke während des Fördervorgangs an die Magnetkette andrückt. Dies führt zu einer vergleichsweise aufwändigen Konstruktion der Transportvorrichtung und schränkt die Bearbeitungsmöglichkeiten an dem Werkstück ein.

Ferner offenbart die DE 198 47 249 A1 eine umlaufende Transportkette für eine Durchlaufmaschine. Die Kette weist mitlaufende Vakuumspannglieder auf, die über einen sich parallel neben dem Oberdrum der Kette erstreckenden Vakuumkanal mit Unterdruck versorgt werden. Dieser ist an seiner Längsseite offen und an dieser offenen Seite mit einem sich synchron bewegenden Dichtband überdeckt, wobei das Dichtband Anschlussöffnungen hat, über welche die Vakuumspannglieder mit Unterdruck versorgt werden. Auch dieses Werkstücktransportsystem besitzt eine aufwändige Konstruktion, da zusätzlich zu dem eigentlichen Endlosumlaufelement separate Werkstückspanner erforderlich sind. Darüber hinaus schränken diese Werkstückspanner die Bearbeitungsmöglichkeiten an den Werkstücken ebenfalls ein.

Die DE 1 96 53 381 A1 betrifft einen Bandförderer bestehend aus parallel zueinander angeordneten Traggurten mit schaltbaren Magnetsystemen und Vakuumkammern mit elastischen, in ihrer Länge steuerbaren Saugnäpfen zum Transport von magnetischen und nichtmagnetischen Werkstücken (Blechen, Platinen).

Die DE 43 17 698 A1 betrifft ein Transportsystem bestehend aus einer umlaufenden Kette und Aufnahmen für die zu transportierenden Gegenstände. In den Aufnahmen sind abgedichtete Kammern angeordnet, die durch flexible Schläuche miteinander in Verbindung stehen. Ferner sind die Kammern durch Ventile mit einem Ventilstößel verschlossen, die beim Auflegen des zu transportierenden Gegenstandes betätigt werden, sodass der Gegenstand angesaugt und gegen eine an der Aufnahme angeordnete elastische Manschette gepresst wird.

Ferner sind die WO 92/14664 A1 sowie die DE 37 01 564 C1 bekannt, die jeweils eine Vorrichtung zum Ergreifen und Transportieren von Gegenständen betreffen. Als weiteres Dokument ist die US 2009/121417 A1 bekannt.

Die EP 2 241 523 zeigt einen Förderkörper und eine Fördereinrichtung, wobei der Förderer ein elastisches Förderelement umfasst, das zumindest um eine erste Drehwelle und eine zweite Drehwelle geführt ist, und durch einen Antrieb der ersten Drehwelle endlos bewegt wird.

Ferner ist die DE 203 13 016 U1 bekannt, die eine Bandfördereinrichtung für den insbesondere hängenden Transport von Fördergütern wie Platten, Platinen, Blechen oder dergleichen offenbart, mit mehreren, entlang einem Förderband angeordneten Magnethalteelementen, die ein Magnetsystem mit wenigstens einem Permanentmagneten zum Erzeugen eines Permanentmagnetenfeldes und wenigstens einem schaltbaren Elektromagneten zum Erzeugen eines Temporärmagnetfeldes aufweist.

Ein Werkstücktransportsystem gemäß dem Oberbegriff des Anspruchs 1 ist aus der DE 10 2004 023 494 A1 bekannt.

### Darstellung der Erfindung

Es ist daher Aufgabe der Erfindung, ein Werkstücktransportsystem der eingangs genannten Art bereitzustellen, das bei einfacher Konstruktion ein erhöhtes Maß an Bearbeitungsmöglichkeiten an den Werkstücken ermöglicht.

Diese Aufgabe wird erfindungsgemäß durch ein Werkstücktransportsystem nach Anspruch 1 gelöst. Besonders bevorzugte Weiterbildungen der Erfindung sind in den abhängigen Ansprüchen angegeben.

Der Erfindung liegt der Gedanke zugrunde, bei einem gattungsgemäßen Werkstücktransportsystem auf den Einsatz separater Spannelemente, Oberdrucksysteme oder dergleichen verzichten zu können. Zu diesem Zweck ist erfindungsgemäß vorgesehen, dass bei einem gattungsgemäßen

Werkstückstransportsystem das Endlosumlaufelement ein Vakuumsystem zum Ansaugen der Werkstücke gegen eine zweite Seite des Endlosumlaufelements aufweist. Es können somit in dem Endlosumlaufelement selbst Ansaugöffnungen zum Ansaugen der Werkstücke gegen die zweite Seite des Endlosumlaufelements vorgesehen sein, sodass ermöglicht wird, die Werkstücke durch Unterdruck an das Endlosumlaufelement anzusaugen. Durch diese Maßnahme vereinfacht sich die Konstruktion des erfindungsgemäßen Werkstücktransportsystems drastisch, da neben dem einfach ausführbaren Vakuumsystem keine separaten Spann-, Stütz- oder Haltemittel erforderlich sind. Darüber hinaus sind die Werkstücke von praktisch allen Seiten - außer der Auflagefläche auf dem Endlosumlaufelement - zugänglich, sodass sich völlig neue Möglichkeiten und Freiheitsgrade bei der Bearbeitung der jeweiligen Werkstücke ergeben.

Gleichzeitig ermöglicht das erfindungsgemäße Werkstücktransportsystem ein präzises und stabiles Fördern der Werkstücke, sodass hohe Durchlaufgeschwindigkeiten und präzise Bearbeitungsvorgänge ermöglicht werden.

Hierbei ist es erfindungsgemäß vorgesehen, dass das Endlosumlaufelement mit seiner ersten Seite magnetisch gegen Führungselemente verspannt ist.

Gemäß der Erfindung ist vorgesehen, dass wenigstens ein Umlenkelement und/oder wenigstens ein Führungselement erste Kanäle aufweist, über die mittels zweiten Kanälen im Endlosumlaufelement Saugöffnungen, die an der zweiten Seite des Endlosumlaufelements angeordnet sind, mit Unterdruck versorgt werden. Durch die Integration der ersten und zweiten Kanäle in die vorhandenen Bauteile des Werkstücktransportsystems minimiert sich die Anzahl der für das Vakuumsystem erforderlichen Bauteile, sodass sich eine besonders einfache Konstruktion ergibt. Ferner ist diese Ausgestaltung besonders verschleißarm und wenig wartungsanfällig, da auf umlaufende Bänder, Führungsketten, Schläuche oder dergleichen verzichtet werden kann.

Dabei ist es besonders bevorzugt, dass in einem Übergangsbereich zwischen wenigstens einem Umlenkelement bzw. wenigstens einem Führungselement und dem Endlosumlaufelement mindestens ein Hohlraum vorgesehen ist, der Austrittsöffnungen benachbarter erster Kanäle miteinander verbindet. Durch diese Ausgestaltung wird bei minimalstem konstruktiven Aufwand sichergestellt, dass die Saugöffnungen im Endlosumlaufelement bei Bedarf stets mit Unterdruck versorgt werden, obgleich sich das Endlosumlaufelement mit seinen zweiten Kanälen mit hoher Geschwindigkeit in Bezug auf die ersten Kanäle bewegt. Es findet stets ein Unterbrechungsfreier Übergang der Unterdruckversorgung zwischen benachbarten ersten Kanälen zu den jeweiligen zweiten Kanälen statt, sodass die Werkstücke zuverlässig gehalten werden können und nur minimale Schwankungen des jeweils an die Werkstücke angelegten Unterdrucks auftreten. Im Hinblick auf eine einfache Konstruktion, vor allem aber auch auf einen energiesparenden und effizienten Betrieb des Werkstücktransportsystems, ist gemäß einer Weiterbildung der Erfindung vorgesehen, dass die jeweiligen Kanäle nur im Bereich eines Oberdrums des Endlosumlaufelements vorgesehen sind. Hierdurch wird das Endlosumlaufelement im Bereich des Unterdrums nicht unnötig mit Unterdruck versorgt, sodass deutlich weniger Energie für die Bereitstellung des Unterdrucks benötigt wird. Dabei kann der Unterdruck beispielsweise mittels einer Vakuumpumpe bereitgestellt werden.

Gemäß einer Weiterbildung der Erfindung ist ferner vorgesehen, dass mindestens ein Ventil vorgesehen ist, um einzelne oder mehrere Saugöffnungen vom Unterdruck abtrennen zu können. Hierdurch ergeben sich weitere Energieeinsparungen, und es lässt sich das Druckniveau an den aktiven Saugöffnungen stabilisieren. Dabei kann mindestens ein Ventil beispielsweise an dem Endlosumlaufelement, aber auch an anderer geeigneter Stelle vorgesehen sein.

Darüber hinaus ist gemäß einer Weiterbildung der Erfindung vorgesehen, dass das Endlosumlaufelement Nanopads aufweist, welche die Verbindung zwischen den Werkstücken und dem Endlosumlaufelement durch ein Anhaften verstärken. Hierdurch wird auch ohne zusätzliche Werkstückspanner, Oberdruckelemente oder dergleichen, eine besonders stabile und zuverlässige Verbindung zwischen den Werkstücken und dem Endlosumlaufelement erreicht, wodurch auch höhere Umlaufgeschwindigkeiten und präzisere Bearbeitungsvorgänge ermöglicht werden.

Um möglichen Schwingungen des Endlosumlaufelements besonders effektiv entgegen zu wirken, ist gemäß einer Weiterbildung der Erfindung vorgesehen, dass das Endlosumlaufelement auch gegen die Umlenkelemente magnetisch verspannt ist. Dabei ist es besonders bevorzugt, dass zum Verspannen des Endlosumlaufelements Magnete am Endlosumlaufelement und/oder den Führungselementen und/oder den Umlenkelementen angeordnet sind.

Die Führungselemente können im Rahmen der vorliegenden Erfindung auf unterschiedliche Art und Weise ausgestaltet sein, wobei sich eine Ausgestaltung als Führungsflächen oder - -rollen als vorteilhaft erwiesen hat. Ebenso gibt es für das Endlosumlaufelement vielfältige Ausgestaltungsmöglichkeiten, wobei im Rahmen der vorliegenden Erfindung eine Ausbildung als Gleitkette oder Rollenkette bevorzugt ist. Hierdurch ergibt sich ein besonders stabiler und präziser Transport bei hohen Fördergeschwindigkeiten und hoher Dauerhaftigkeit.

Ein erfindungsgemäßes Verfahren zum Transportieren von Werkstücken unter Einsatz des erfindungsgemäßen Werkstücktransportsystems ist in Patentanspruch 11 definiert.

Dieses zeichnet sich durch eine gezielte Steuerung der Ansaugverteilung in Bezug auf die jeweils aufliegenden Werkstücke aus und ermöglicht somit eine Reduzierung des Energieverbrauchs ohne jegliche Einbußen bei Fördergeschwindigkeit, Bearbeitungsqualität und Dauerhaftigkeit.

### Kurze Beschreibung der Zeichnungen

Fig. 1 zeigt schematisch eine frei geschnittene, teilweise Seitenansicht eines Werkstücktransportsystems als bevorzugte Ausführungsform der Erfindung;
Fig. 2 zeigt schematisch eine Draufsicht des in Fig. 1 gezeigten Werkstückstransportsystems;
Fig. 3 zeigt schematisch eine teilweise Schnittansicht des in

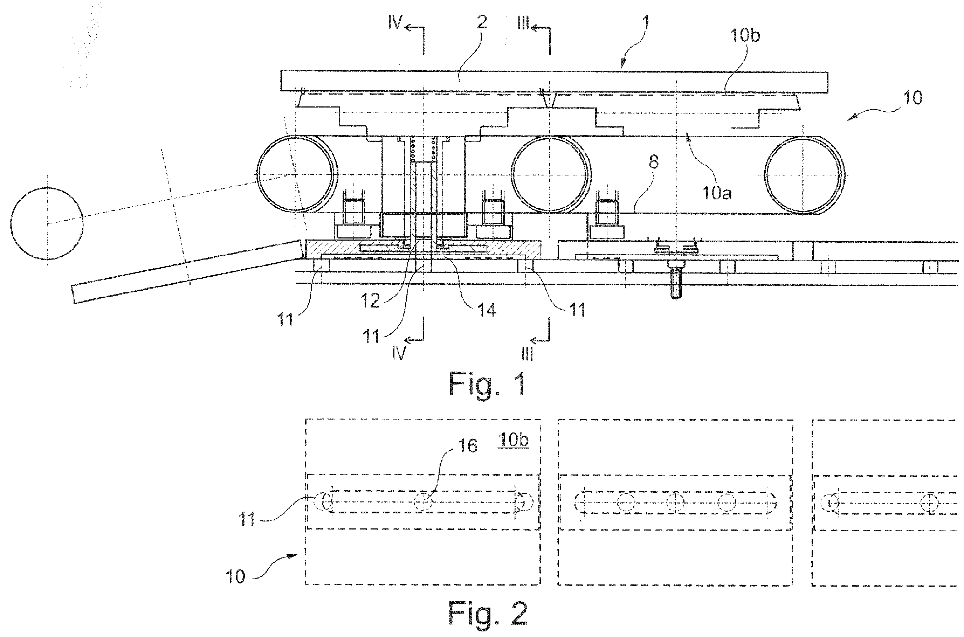

Fig. 1 gezeigten Werkstücktransportsystems;

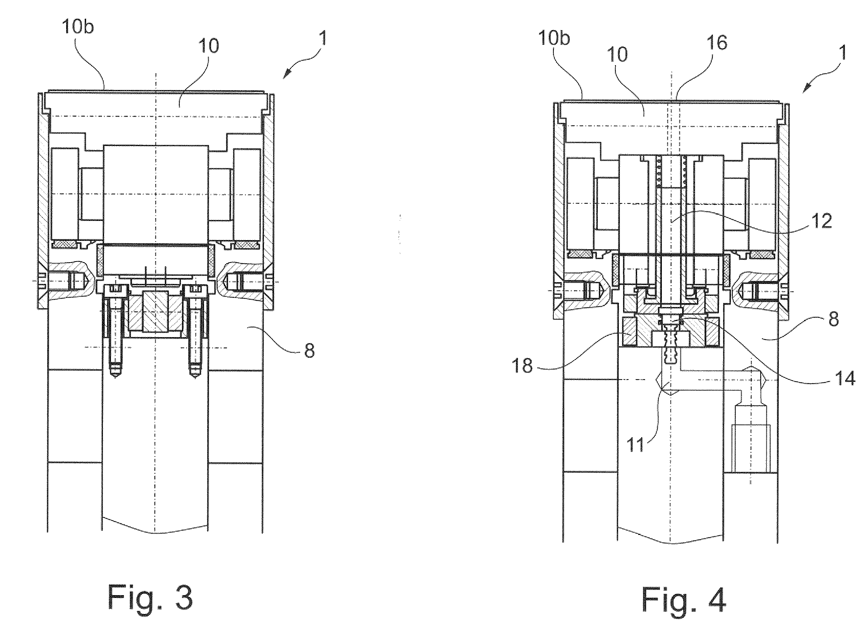

Fig. 4 zeigt schematisch eine teilweise Schnittansicht des in
Fig. 1 gezeigten Werkstücktransportsystems;

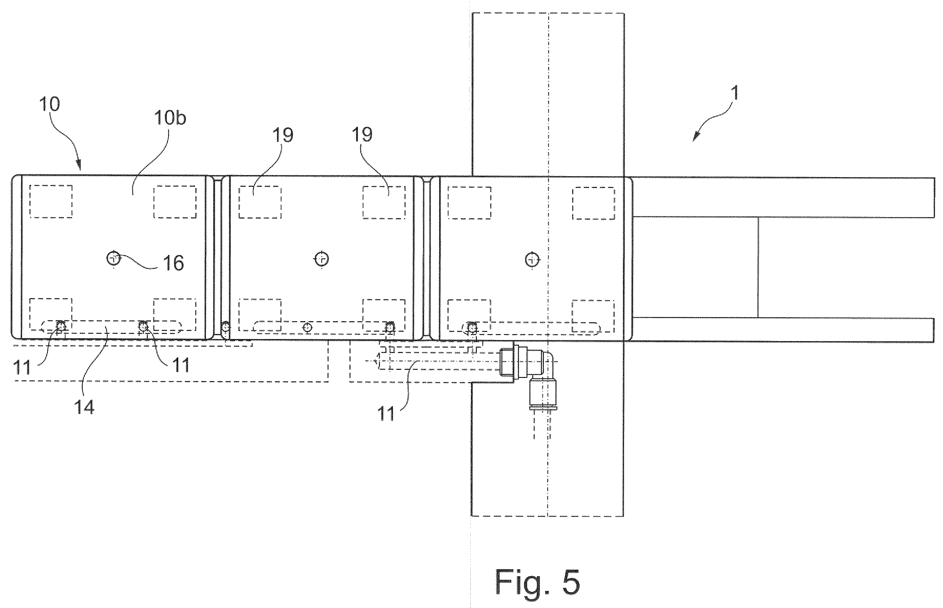

Fig. 5 zeigt schematisch eine Draufsicht eines Werkstücktransportsystems gemäß einer zweiten bevorzugten Ausführungsform;

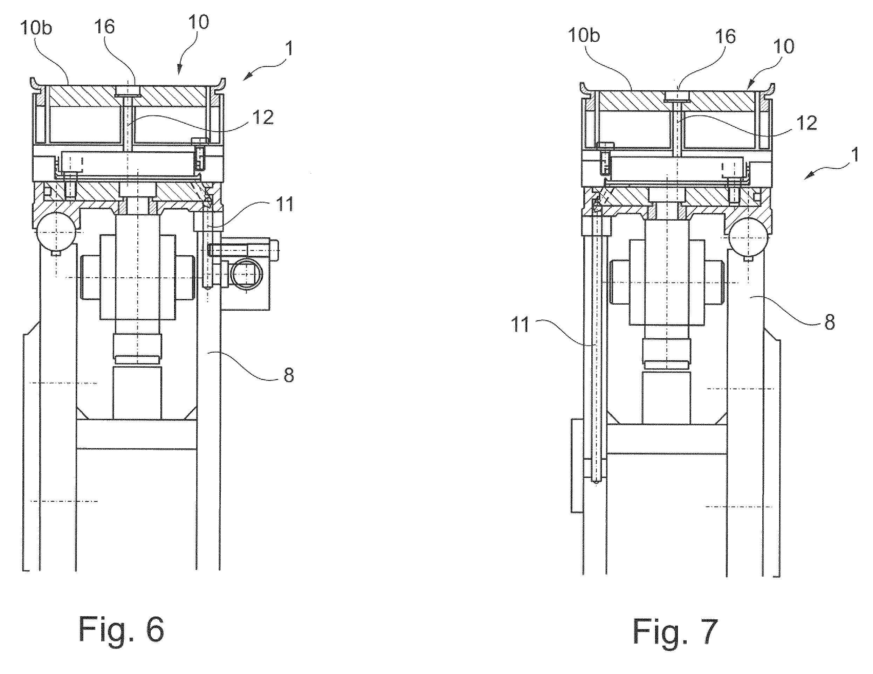

Fig. 6 zeigt eine teilweise Schnittansicht des in Fig. 5 gezeigten Werkstücktransportsystems;
Fig. 7 zeigt eine teilweise Schnittansicht des in Fig. 5 gezeigten Werkstücktransportsystems.

### Ausführliche Beschreibung bevorzugter Ausführungsformen

Bevorzugte Ausführungsformen der Erfindung werden nachfolgend ausführlich unter Bezugnahme auf die begleitenden Zeichnungen beschrieben.

Eine erste bevorzugte Ausführungsform eines erfindungsgemäßen Werkstücktransportsystems 1 ist in den Figuren 1 bis 4 schematisch in verschiedenen Ansichten dargestellt. Das Werkstücktransportsystem 1 ist Teil einer Maschine zum Bearbeiten von Werkstücken 2, die bevorzugt zumindest abschnittsweise aus Holz, Holzwerkstoffen, Kunststoff, Aluminium oder dergleichen bestehen, die beispielsweise im Bereich der Möbel- oder Bauelementeindustrie verbreitet zum Einsatz kommen. Neben dem Werkstücktransportsystem 1 umfasst die Bearbeitungsmaschine vielfältige weitere Bauteile wie insbesondere eine Bearbeitungseinheit (nicht gezeigt) zum Bearbeiten der Werkstücke. Bei der Bearbeitungseinheit kann es sich beispielsweise um eine Bearbeitungsspindel zum Einwechseln von Bearbeitungswerkzeugen oder Bearbeitungsaggregaten (z.B. spanende Bearbeitungen, wie Fräsen, Bohren, etc.) handeln. Derartige Bauteile einer Bearbeitungsmaschine sind dem Fachmann bekannt und bedürfen daher keiner näheren Erläuterung.

Das Werkstücktransportsystem 1 umfasst, wie in Fig. 1 am besten zu erkennen ist, zunächst ein Endlosumlaufelement 10 zum Mitführen der Werkstücke 2, bei dem es sich in der vorliegenden Ausführungsform um eine Rollenkette handelt. Das Endlosumlaufelement 10 ist mittels Führungselementen 8 an seiner ersten (inneren) Seite 10a geführt, wobei sich an den Enden der Führungselemente 8 Umlenkelemente (nicht gezeigt) wie Umlenkrollen oder Umlenkzahnräder befinden. Die Führungselemente 8 sind in der vorliegenden Ausführungsform als Führungsflächen gebildet.

Das Endlosumlaufelement 10 ist in der vorliegenden Ausführungsform mittels Magneten 18 mit seiner ersten Seite 10a gegen die Führungselemente 8 und gegebenenfalls auch die Umlenkelemente (nicht gezeigt) verspannt. Hierdurch ergibt sich ein besonders stabiler Betrieb des Umlaufelements 10, ohne dass spezielle Niederhalter oder dergleichen erforderlich sind.

Ferner weist das Endlosumlaufelement 10 ein Vakuumsystem 11, 12, 14 zum Ansaugen der Werkstücke 2 gegen eine zweite Seite 10b des Endlosumlaufelements 10 auf. Das Vakuumsystem dient dazu, Saugöffnungen 16, die in der zweiten Seite 10b des Endlosumlaufelements 10 vorgesehen sind, mit einem Unterdruck zu versorgen. Zu diesem Zweck weist das Vakuumsystem zunächst erste Kanäle 11 auf, die sich jeweils durch ein Führungselement 8 hindurch erstrecken oder an einem Führungselement 8 vorgesehen sind. Auch die Umlenkelemente können entsprechende erste Kanäle aufweisen. Die ersten Kanäle 11 kommunizieren mit zweiten Kanälen 12 im Endlosumlaufelement 10, die an den Saugöffnungen 16 auf der zweiten Seite 10b des Endlosumlaufelements 10 enden.

Im Übergangsbereich zwischen dem jeweiligen Führungselement 8 (bzw. Umlenkelement) und dem Endlosumlaufelement 10 ist vorzugsweise mindestens ein Hohlraum 14 vorgesehen, der die Austrittsöffnungen benachbarter erster Kanäle 11 miteinander verbindet. In der in Fig. 1 gezeigten Ausführungsform erstreckt sich der Hohlraum 11 sogar über die Austrittsöffnungen von drei ersten Kanälen, sodass eine besonders kontinuierliche Versorgung der Saugöffnungen 16 mit Unterdruck sichergestellt wird. Um gleichzeitig besonders energiesparend zu arbeiten, sind die Kanäle 11, 12 jeweils nur im Bereich eines Oberdrums des Endlosumlaufelements vorgesehen. Dabei stehen die Kanäle 11, 12 mit einer Vakuumpumpe (nicht gezeigt) der Verbindung, die das an die Saugöffnugnen 16 anzulegende Vakuum erzeugt. Zwischen der Vakuumpumpe und den Saugöffnungen 16 können an beliebigen Stellen geeignete Ventile (nicht gezeigt) vorgesehen sein, um einzelne oder mehrere der Saugöffnungen 16 bei Bedarf vom Unterdruck abtrennen zu können.

Durch die erfindungsgemäße Ausgestaltung des Werkstücktransportsystems 1 wird es erstmals möglich, auch ein schnell laufendes Endlosumlaufelement 10 ohne aufwändige Schläuche oder sonstige mitlaufende Bauteile einen zum Halten von Werkstücken ausreichenden Unterdruck auf die Werkstücke aufzubringen, ohne dass zusätzliche Halteeinrichtungen, Spanner oder dergleichen erforderlich sind. Hierdurch ergibt sich bei einfacher Konstruktion eine sehr große Freiheit bei der Bearbeitung der Werkstücke.

Ein vorteilhafter Betrieb des erfindungsgemäßen Werkstücktransportsystems 1 vollzieht sich beispielsweise wie folgt. Zunächst werden Werkstücke 2 auf das Endlosumlaufelement 10 im Bereich 2 der jeweiligen Saugöffnungen 16 aufgelegt. Anschließend wird das jeweilige Werkstück 2 mittels des Vakuumsystems 11, 12, 14 angesaugt, wobei Saugöffnungen 16 im Bereich des aufliegenden Werkstücks 2 mit Unterdruck beaufschlagt werden, während es möglich ist, Saugöffnungen 16, auf denen kein Werkzeug aufliegt, mittels der Ventile (nicht gezeigt) vom Unterdruck abzutrennen bzw. nicht mit Unterdruck zu beaufschlagen.

In diesem Zustand können die Werkstücke 2 mittels des Umlaufelements 10 mit sehr hoher Geschwindigkeit transportiert und gegebenenfalls gleichzeitig bearbeitet werden. Nach Abschluss des Transport- und gegebenenfalls Bearbeitungsvorganges kann das Werkstück 2 vom Endlosumlaufelement heruntergenommen werden, wobei zuvor der Unterdruck von den entsprechenden Saugöffnungen 16 abgelassen wird. Dieses Ablassen des Unterdrucks kann beispielsweise dadurch erfolgen, dass das Endlosumlaufelement einen Bereich des Führungselements 8 erreicht, in welchem keine ersten Kanäle 11 vorgesehen sind. Alternativ ist es auch möglich, die Kanäle 11 in diesem Bereich mittels Ventilen oder anderer Maßnahmen von der Vakuumpumpe abzutrennen.

Eine zweite bevorzugte Ausführungsform des erfindungsgemäßen Werkstücktransportsystem 1 ist in den Figuren 5, 6 und 7 in verschiedenen Ansichten dargestellt. Das in diesen Figuren gezeigte Werkstücktransportsystem 1 unterscheidet sich von dem zuvor beschriebenen Werkstücktransportsystem zunächst dadurch, dass das Endlosumlaufelement als Gleitkette ausgebildet ist.

Ferner sind bei dieser Ausführungsform die Kanäle 11 und 12 etwas anders durch das Führungselement 8 und das Endlosumlaufelement 10 hindurchgeführt. Dies veranschaulicht, dass die vorliegende Erfindung nicht auf eine bestimmte geometrische Ausgestaltung oder Anordnung des Vakuumsystems beschränkt ist. Ferner weist das Endlosumlaufelement 10 in der vorliegenden Ausführungsform, wie in Fig. 5 am besten zu erkennen ist, Nanopads 19 auf. Diese dienen dazu, die Verbindung zwischen den Werkstücken 2 und dem Endlosumlaufelement 10 durch ein Anhaften zu verstärken. So kann bei den Nanopads 19 beispielsweise der sogenannte "Gecko"-Effekt zum Einsatz kommen, wobei auch andere Nano-Oberflächen für die Pads 19 möglich sind. Insgesamt wird hierdurch die Transportstabilität der Werkstücke 2 erhöht, sodass umso mehr auf zusätzliche Spannvorrichtungen, Oberdruckvorrichtungen oder dergleichen verzichtet werden kann.

## Patentansprüche

1. Werkstücktransportsystem (1) für eine Maschine zum Bearbeiten von Werkstücken (2), die bevorzugt zumindest abschnittsweise aus Holz, Holzwerkstoffen, Kunststoff, Aluminium oder dergleichen bestehen, mit
wenigstens einem Endlosumlaufelement (10) zum Mitführen der Werkstücke (2), das mittels Führungselementen und Umlenkelementen an seiner ersten Seite (10a) geführt ist, wobei
das Endlosumlaufelement (10) mit seiner ersten Seite (10a) magnetisch gegen Führungselemente (8) verspannt ist und das Endlosumlaufelement (10) als Gleitkette oder Rollenkette ausgeführt ist
**dadurch gekennzeichnet, dass** das Endlosumlaufelement (10) ein Vakuumsystem (11, 12, 14) zum Ansaugen der Werkstücke (2) gegen eine zweite Seite (10b) des Endlosumlaufelementes (10) aufweist,
und dass wenigstens ein Umlenkelement und/oder wenigstens ein Führungselement (8) erste Kanäle (11) aufweist, über die mittels zweiten Kanälen (12) im Endlosumlaufelement (10) Saugöffnungen (16), die an der zweiten Seite (10b) des Endlosumlaufelementes (10) angeordnet sind, mit Unterdruck versorgt werden.

2. Werkstücktransportsystem (1) nach Anspruch 1, **dadurch gekennzeichnet, dass** in einem Übergangsbereich zwischen wenigstens einem Umlenkelement bzw. wenigstens einem Führungselement (8) und dem Endlosumlaufelement (10) mindestens ein Hohlraum (14) vorgesehen ist, der Austrittsöffnungen benachbarter erster Kanäle (11) miteinander verbindet.

3. Werkstücktransportsystem (1) nach Anspruch 1 oder 2, **dadurch gekennzeichnet, dass** die Kanäle (11) nur im Bereich eines Obertrums des Endlosumlaufelements (10) vorgesehen sind.

4. Werkstücktransportsystem (1) nach einem der vorhergehenden Ansprüche,
**dadurch gekennzeichnet,**
**dass** es wenigstens eine Vakuumpumpe zur Erzeugung eines Vakuums an den Saugöffnungen (16) aufweist.

5. Werkstücktransportsystem (1) nach einem der vorhergehenden Ansprüche,
**dadurch gekennzeichnet,**
**dass** mindestens ein Ventil vorgesehen ist, um einzelne oder mehrere Saugöffnungen (16) vom Unterdruck abtrennen können.

6. Werkstücktransportsystem (1) nach einem der vorhergehenden Ansprüche,
**dadurch gekennzeichnet,**
**dass** das Endlosumlaufelement (10) Nanopads (19) aufweist, welche die Verbindung zwischen den Werkstücken (2) und dem Endlosumlaufelement (10) durch ein Anhaften verstärken.

7. Werkstücktransportsystem (1) nach einem der vorhergehenden Ansprüche,
**dadurch gekennzeichnet,**
**dass** das Endlosumlaufelement (10) auch gegen die Umlenkelemente magnetisch verspannt ist.

8. Werkstücktransportsystem (1) nach einem der vorhergehenden Ansprüche,
**dadurch gekennzeichnet,**
**dass** zum Verspannen des Endlosumlaufelementes (10) Magnete (18) am Endlosumlaufelement (10) und/oder den Führungselementen (8) und/oder den Umlenkelementen angeordnet sind.

9. Werkstücktransportsystem (1) nach einem der vorhergehenden Ansprüche,
**dadurch gekennzeichnet,**
**dass** die Führungselemente (8) als Führungsflächen oder Rollen ausgeführt sind.

10. Maschine zum Bearbeiten von Werkstücken (2), die bevorzugt zumindest abschnittsweise aus Holz, Holzwerkstoffen, Kunststoff, Aluminium oder dergleichen bestehen, mit
einem Werkstücktransportsystem (1) nach einem der vorhergehenden Ansprüche, und
einer Bearbeitungseinheit zum Bearbeiten der Werkstücke (2).

11. Verfahren zum Transportieren von Werkstücken mittels eines Werkstücktransportsystem (1) nach einem der vorhergehenden Ansprüche, mit den Verfahrensschritten:
(a) Auflegen eines Werkstücks (2) auf das Endlosumlaufelement (10);
(b) Ansaugen des Werkstücks (2) mittels des Vakuumsystems (11, 12, 14), wobei Saugöffnungen (16) im Bereich des aufliegenden Werkstücks (2) mit Unterdruck beaufschlagt werden, während Saugöffnungen (16) auf denen kein Werkstück (2) aufliegt, mittels der Ventile (13) vom Unterdruck abgetrennt sind;
(c) Transportieren des Werkstücks (2) mittels des Endlosumlaufelementes (10);
(d) Abtrennen der Saugöffnungen (16) vom Unterdruck mittels der Ventile (13) und Herunternehmen des Werkstücks (2) vom Endlosumlaufelement (10).

## Claims

1. Workpiece transport system (1) for a machine for processing workpieces (2) which preferably consist at least in sections of wood, derived timber products, plastic, aluminium or the like, having at least one continuous circulating element (10) for carrying along the workpieces (2) which is guided by means of guide elements and deflecting elements on its first side (10a), wherein the continuous circulating element (10) with its first side (10a) is clamped magnetically against guide elements (8) and the continuous circulating element (10) is constructed as a sliding chain or roller chain, **characterised in that** the continuous circulating element (10) has a vacuum system (11, 12, 14) for drawing in of the workpieces (2) against a second side (10b) of the continuous circulating element (10), and **in that** at least one deflecting element and/or at least one guide element (8) has first channels (11), by means of which suction openings (16), which are arranged on the second side (10b) of the continuous circulating element (10), are supplied with negative pressure by means of second channels (12) in the continuous circulating element (10).

2. Workpiece transport system (1) according to claim 1, **characterised in that** in a transition region between at least one deflecting element or at least one guide element (8) and the continuous circulating element (10), at least one cavity (14) is provided which connects outlet openings of adjacent first channels (11) to one another.

3. Workpiece transport system (1) according to claim 1 or 2, **characterised in that** the channels (11) are provided only in the region of an upper strand of the continuous circulating element (10).

4. Workpiece transport system (1) according to one of the preceding claims, **characterised in that** it has at least one vacuum pump for generating a vacuum at the suction openings (16).

5. Workpiece transport system (1) according to one of the preceding claims, **characterised in that** at least one valve is provided to be able to separate individual or several suction openings (16) from the negative pressure.

6. Workpiece transport system (1) according to one of the preceding claims, **characterised in that** the continuous circulating element (10) has nanopads (19) which strengthen the connection between the workpieces (2) and the continuous circulating element (10) by adhesion.

7. Workpiece transport system (1) according to one of the preceding claims, **characterised in that** the continuous circulating element (10) is also clamped magnetically against the deflecting elements.

8. Workpiece transport system (1) according to one of the preceding claims, **characterised in that** to clamp the continuous circulating element (10), magnets (18) are arranged on the continuous circulating element (10) and/or the guide elements (8) and/or the deflecting elements.

9. Workpiece transport system (1) according to one of the preceding claims, **characterised in that** the guide elements (8) are constructed as guide surfaces or rollers.

10. Machine for processing workpieces (2) which preferably consist at least in sections of wood, derived timber products, plastic, aluminium or the like, having a workpiece transport system (1) according to one of the preceding claims, and a processing unit for processing the workpieces (2).

11. Method for transporting workpieces by means of a workpiece transport system (1) according to one of the preceding claims, having the method steps:
(a) placing a workpiece (2) on the continuous circulating element (10);
(b) drawing in of the workpiece (2) by means of the vacuum system (11, 12, 14), wherein suction openings (16) are exposed to negative pressure in the region of the resting workpiece (2), whereas suction openings (16), on which there is no workpiece (2), are separated from the negative pressure by means of the valves (13);
(c) transporting the workpiece (2) by means of the continuous circulating element (10);
(d) separating the suction openings (16) from the negative pressure by means of the valves (13) and taking away the workpiece (2) from the continuous circulating element (10).

## Revendications

1. Système de transport de pièces à usiner (1) pour une machine d'usinage de pièces (2), qui sont constituées de manière préférée au moins par endroits de bois, de matériaux dérivés du bois, de matière plastique, d'aluminium ou similaires, comprenant :
au moins un élément rotatif sans fin (10) servant à entraîner les pièces à usiner (2), lequel est guidé au moyen d'éléments de guidage et d'éléments de renvoi sur son premier côté (10a),
dans lequel :
l'élément rotatif sans fin (10) est tendu contre des éléments de guidage (8) par effet magnétique par son premier côté (10a) et
l'élément rotatif sans fin (10) se présente sous la forme d'une chaîne coulissante ou d'une chaîne à rouleaux,
**caractérisé en ce que** l'élément rotatif sans fin (10) présente un système de vide (11, 12, 14) servant à aspirer les pièces à usiner (2) contre un second côté (10b) de l'élément rotatif sans fin (10),
et **en ce qu'**au moins un élément de renvoi et/ou au moins un élément de guidage (8) présente(nt) des premiers canaux (11), par l'intermédiaire desquels des ouvertures d'aspiration (16), qui sont ménagées sur le deuxième côté (10b) de l'élément rotatif sans fin (10), sont soumises à une dépression au moyen de seconds canaux (12) ménagés dans l'élément rotatif sans fin (10).

2. Système de transport de pièces à usiner (1) selon la revendication 1,
**caractérisé en ce que** :
il est prévu dans une zone de transition entre au moins un élément de renvoi ou au moins un élément de guidage (8) et l'élément rotatif sans fin (10), au moins un espace creux (14), qui relie entre elles des ouvertures de sortie de premiers canaux (11) adjacents.

3. Système de transport de pièces à usiner (1) selon la revendication 1 ou 2,
**caractérisé en ce que** :
les canaux (11) sont prévus seulement dans la zone du brin supérieur de l'élément rotatif sans fin (10).

4. Système de transport de pièces à usiner (1) selon l'une quelconque des revendications précédentes,
**caractérisé en ce que** :
il présente au moins une pompe à vide servant à produire un vide au niveau des ouvertures d'aspiration (16).

5. Système de transport de pièces à usiner (1) selon l'une quelconque des revendications précédentes,
**caractérisé en ce que** :
il est prévu au moins une soupape afin de pouvoir isoler certaines ou plusieurs des ouvertures d'aspiration (16) de la dépression.

6. Système de transport de pièces à usiner (1) selon l'une quelconque des revendications précédentes,
**caractérisé en ce que** :
l'élément rotatif sans fin (10) présente des nanopastilles (19) qui renforcent par adhérence la liaison entre les pièces à usiner (2) et l'élément rotatif sans fin (10).

7. Système de transport de pièces à usiner (1) selon l'une quelconque des revendications précédentes,
**caractérisé en ce que** :
l'élément rotatif sans fin (10) est également tendu par effet magnétique contre les éléments de renvoi.

8. Système de transport de pièces à usiner (1) selon l'une quelconque des revendications précédentes,
**caractérisé en ce que** :
des aimants (18) sont disposés sur l'élément rotatif sans fin (10) et/ou sur les éléments de guidage (8) et/ou les éléments de renvoi afin de tendre l'élément rotatif sans fin (10).

9. Système de transport de pièces à usiner (1) selon l'une quelconque des revendications précédentes,
**caractérisé en ce que** :
les éléments de guidage (8) se présentent sous la forme de surfaces de guidage ou de rouleaux.

10. Machine d'usinage de pièces (2), qui sont constituées de manière préférée au moins par endroits de bois, de matériaux dérivés du bois, de matière plastique, d'aluminium ou similaires, comprenant :
un système de transport de pièces à usiner (1) selon l'une quelconque des revendications précédentes, et
une unité d'usinage servant à usiner les pièces (2).

11. Procédé servant à transporter des pièces à usiner au moyen d'un système de transport de pièces à usiner (1) selon l'une quelconque des revendications précédentes, comprenant les étapes de procédé consistant à :
(a)déposer une pièce à usiner (2) sur l'élément rotatif sans fin (10) ;
(b) aspirer la pièce à usiner (2) au moyen du système de vide (11, 12, 14), dans lequel des ouvertures d'aspiration (16) dans la zone de la pièce à usiner (2) déposée sont soumises à une dépression, tandis que des ouvertures d'aspiration (16), sur lesquelles ne repose aucune pièce à usiner (2), sont isolées de la dépression au moyen des soupapes (13) ;
(c) transporter la pièce à usiner (2) au moyen de l'élément rotatif sans fin (10) ; et
(d) isoler les ouvertures d'aspiration (16) de la dépression au moyen des soupapes (13) et récupérer la pièce à usiner (2) de l'élément rotatif sans fin (10).
